# EUROPÄISCHE PATENTSCHRIFT

(11) **EP 1 159 073 B1**
(45) Veröffentlichungstag und Bekanntmachung des Hinweises auf die Patenterteilung: **03.11.2004**
(21) Anmeldenummer: 00906238.1
(22) Anmeldetag: 28.01.2000
(51) Int. Cl.: B01L 9/06, G01N 1/24, B01L 9/00, B01L 3/00, B01D 1/00

(54) **VORRICHTUNG ZUM BEARBEITEN VON PROBEN**
DEVICE FOR PROCESSING SAMPLES
DISPOSITIF DE TRAITEMENT D' ECHANTILLONS

(30) Priorität: 10.02.1999 EP 99810109
(43) Veröffentlichungstag der Anmeldung: 05.12.2001
(73) Patentinhaber: Büchi Labortechnik AG, CH-9230 Flawil (CH)
(72) Erfinder: FREYDL, Ernst, CH-9011 St. Gallen (CH); TAUER, Andreas, CH-8049 Zürich (CH); ZIOLKO, Thomas, CH-9325 Roggwil (CH)
(74) Vertreter: Müller, Christoph Emanuel
(86) Internationale Anmeldenummer: PCT/EP2000/000653
(87) Internationale Veröffentlichungsnummer: WO 2000/047324

(56) Entgegenhaltungen:
- EP-A- 0 400 965
- EP-A- 0 961 108
- WO-A-97/10883
- CH-A- 688 987
- DE-A1- 3 220 879
- US-A- 3 847 200
- US-A- 3 977 935
- US-A- 4 003 713
- US-A- 4 346 057
- US-A- 5 060 151
- US-A- 5 569 357
- US-A- 5 604 130

## Beschreibung

Die Erfindung betrifft eine Vorrichtung zum Bearbeiten, insbesondere zum Verdampfen von Proben gemäß dem Oberbegriff des unabhängigen Patentanspruchs.

Zum Verdampfen von in Probegefäßen gehaltenen, gelösten Proben ist es bekannt, die Probe im Gefäß zu erhitzen. Zum Heruntersetzen des Siedepunktes des Lösungsmittels ist es bekannt, in dem Probegefäss ein Vakuum zu erzeugen. Damit ist Verdampfung bei niedrigeren Temperaturen möglich.

Ausserdem ist es bekannt, die Probegefäße zu bewegen, um in der gelösten Probe Wirbel zu erzeugen. Die Verdampfungsrate des Lösungsmittels wird dadurch erhöht.

Es ist wünschenswert, in einem Verdampfungsgefäss gleichzeitig mehrere unterschiedliche Proben bearbeiten zu können.

Aus der CH 688 987 A ist beispielsweise eine Reaktionskammer bekannt, in welche mehrere Probegefäße gleichzeitig hineingestellt werden können. Die Reaktionskammer kann unter Vakuum gesetzt werden. Die Probegefäße werden in ein bewegbares Rack gesetzt, welches über eine Magnetkupplung von aussen her antreibbar ist.

Diese Vorrichtung ist aber mit dem Nachteil behaftet, dass komplizierte Mechanismen zum Antreiben und Erhitzen der in der geschlossenen Kammer gehaltenen Probegefäße vorgesehen werden müssen.

Aus der US 5 569 357 A ist ebenfalls ein Verdampfer bekannt, bei welchem in den Probelösungen Wirbel erzeugt werden. Auch in dieser Vorrichtung sind mehrere Probegefäße in einem gemeinsamen Raum angeordnet.

Bei allen diesen bekannten Vorrichtungen besteht das Problem, dass sich die Proben in einzelnen Probegefäßen (welche unterschiedlicher Natur sein können) über die Gasphase vermischen können. Die Reinheit des Endproduktes ist damit nicht mehr gewährleistet.

Die Offenlegungsschrift DE 3220879 A offenbart eine Vorrichtung zum Bearbeitung von Proben in mit wenigstens einer Einfüllöffnung versehenen Probengefäßen mit Haltemitteln zum gleichzeitigen Halten mehrerer Probegefäße gemäß der Präambel des Anspruchs 1.

Die Patentschrift US 4346057 A offenbart eine Vorrichtung zum Bearbeitung von Proben in mit wenigstens einer Einfüllöffnung versehenen Probengefäßen mit Haltemitteln zum gleichzeitigen Halten mehrerer Probegefäße, mit einer Verbindungsplatte welche auf die Einfüllöffnungen der Gefäße dichtend aufpressbar ist.

Es ist deshalb eine Aufgabe der vorliegenden Erfindung, die Nachteile des Bekannten zu vermeiden, insbesondere eine Vorrichtung zum Bearbeiten, insbesondere Verdampfen von Proben zu schaffen, welche auf einfache Weise die Bearbeitung, insbesondere Verdampfung mehrerer in verschiedenen Probegefäßen enthaltenen Proben erlaubt. Die Vorrichtung soll eine Vermischung der Proben über die Gasphase wirksam verhindern, soll einfach herstellbar und betreibbar sein und soll auf einfache Weise unterschiedlichen Erfordernissen anpassbar sein. Insbesondere soll das Rückfliessen von Kondensat in die Probegefäße verhindert werden.

Erfindungsgemäss werden diese Aufgaben mit einer Vorrichtung gemäß den Merkmalen des kennzeichnenden Teils des unabhängigen Patentanspruchs gelöst.

Die Vorrichtung mit den Merkmalen der Erfindung dient zum Bearbeiten von Proben, welche in Probegefäßen enthalten sind. Die Probegefäße weisen wenigstens eine Einfüllöffnung auf, durch welche die Probe in das Probegefäß eingegeben werden kann. Insbesondere dient die Vorrichtung zum Verdampfen der Proben.

Die Vorrichtung weist Haltemittel zum gleichzeitigen Halten von mehreren Probegefäßen auf. Die Haltemittel sind typischerweise als Rack ausgebildet. Die üblicherweise etwa zylindrischen Probegefässen (unten geschlossene Röhrchen) werden in das Rack gestellt.

Die Vorrichtung weist ausserdem optionale Heizmittel zum Erwärmen der in den Probegefäßen enthaltenen Probe auf. Die Heizmittel bestehen typischerweise aus einer normalen Heizplatte. Bei bestimmten Lösungsmittel mit niedrigem Siedepunkt ist eine Heizung nicht notwendig. Verdampfung erfolgt alleine aufgrund des Unterdrucks.

Die Vorrichtung ist ausserdem mit Verbindungswegen zum Verbinden der Einfullöffnungen mit dem Anschluss der Mittel zum Erzeugen eines Unterdrucks versehen. Grundsätzlich sind alle Mittel zum Erzeugen eines Unterdrucks geeignet, welche einen ausreichend hohen Unterdruck erzeugen können. Hier und im Folgenden werden unter dem Begriff Vakuumpumpe jegliche Mittel verstanden, welche einen solchen Unterdruck erzeugen können.

Die Vorrichtung weist Verbindungsmittel auf, mittels welchen die Probegefäße einzeln oder in Gruppen gasdicht mit einem Anschluss der Vakuumpumpe verbindbar und dadurch evakuierbar sind. Diese Ausbildung der Verbindungsmittel weist mehrere Vorteile auf.

Erstens kann durch die gasdichte Verbindung der Probegefäße mit der Vakuumpumpe eine Vermischung der Proben über die Gasphase verhindert werden. Die Probegefäße sind im Prinzip geschlossen und kommunizieren direkt mit der Vakuumpumpe.

Zweitens sind das Rack und die Probegefäße direkt zugänglich sind. Da diese nicht in einem geschlossenen Raum angeordnet sind, ist es möglich, diese direkt zu heizen oder anzutreiben.

Die Verbindungsmittel weisen wenigstens eine Verbindungsplatte auf. Die Verbindungsplatte ist dichtend auf die Einfüllöffnungen der Probegefäße aufpressbar. Weil in den Probegefässen Unterdruck herrscht, sind keine besonderen Vorkehrungen zum Aufpressen der Verbindungsplatte nötig. Die Verbindungsplatte wird dichtend angesaugt. Die Verbindungsplatte ist mit Verbindungswegen versehen, welche zum Verbinden der Einfüllöffnungen mit einem Anschluss der Vakuumpumpe dienen. Damit eine dichtende Verbindung gewährleistet ist, sind zwischen der Verbindungsplatte und den Einfüllöffnungen der Probegefäße vorteilhaft Dichtmittel angeordnet. Die Dichtmittel können auswechselbar sein. Kontaminierte Dichtungen können auf diese Weise einfach ausgetauscht werden.

Die Verbindungsplatte weist Längskanäle auf, welche sich von der den Probegefäßen zuwendbaren Unterseite der Verbindungsplatte etwa rechtwinklig zur Unterseite erstrecken. Die Längskanäle sind fluchtend auf die Einfüllöffnungen aufsetzbar.

Die Längskanäle sind über die Verbindungswege mit dem Anschluss der Vakuumpumpe verbindbar. Durch einfaches Aufsetzen der Verbindungsplatte auf die Einfüllöffnungen der Probegefäße werden diese gasdicht mit der Vakuumpumpe verbunden. Eine Vermischung der Proben über die Gasphase ausserhalb der Probegefäße ist damit wirkungsvoll vermieden.

Die Längskanäle erstrecken sich quer durch die Verbindungsplatte, dass heißt bis an die der Unterseite der Verbindungsplatte abgewandte Oberseite. Die Verbindungswege in der Verbindungsplatte sind dabei durch Vertiefungen an der Oberseite gebildet. Die Vertiefungen kommunizieren mit den Längskanälen. Durch Verbindung der Längskanäle mit dem Anschluss der Vakuumpumpe kann eine gasdichte Verbindung zwischen Vakuumpumpe und den Probegefäßen hergestellt werden. Vorteilhaft wird dabei das Niveau der Austrittsöffnung derart gewählt, dass es oberhalb des Niveau der Vertiefungen liegt. Auf diese Weise werden Schikanen gebildet, welche ein Rückfließen von kondensierter Flüssigkeit in die Probegefäße vermeiden. Eine Cross-Contamination wird damit vermieden.

In einem besonders bevorzugten Ausführungsbeispiel weist die Vorrichtung Antriebsmittel zum Erzeugen einer Vortexbewegung auf (unter Vortexbewegung wird eine Bewegung verstanden, welche in den Probegefäßen die erwünschten Wirbel erzeugt). Die Verbindungsmittel sind dabei gleichzeitig derart ausgebildet, dass die Haltemittel und die Probegefäße unabhängig von der Vakuumpumpe bewegbar sind. Insbesondere weisen die Verbindungsmittel flexible Komponenten auf.

Die Verbindungsplatte kann eine mit den Sammelkanälen kommunizierende Anschlussöffnung aufweisen, welche mit dem Anschluss der Vakuumpumpe verbunden oder verbindbar ist. Die Verbindungsplatte dient also dazu, dem Anschluss der Vakuumpumpe mit den verschiedenen Probegefässen zu verbinden. Je nach Größe und Anzahl der Probegefäße können unterschiedliche Haltevorrichtungen (d.h. Racks) und dazu passende Verbindungsplatten vorgesehen werden.

Eine besonders einfache Konstruktion ergibt sich, wenn die Sammelkanäle an der Oberseite der Verbindungsplatte angeordnet sind und nach oben offen sind. Die Abdichtung ergibt sich durch Aufsetzen einer Abdichtplatte. Zwischen der Abdichtplatte und der Verbindungsplatte kann ausserdem entlang deren Rand eine Dichtung eingesetzt sein.

Die Abdichtplatte ist vorzugsweise aus Glas gefertigt. Zum Vermeiden einer frühzeitigen Kondensation der Lösungsmittel an der Abdichtplatte kann diese oder auch die Verbindungsplatte beheizbar ausgebildet sein.

Die Abdichtplatte und/oder die Verbindungsplatte können ausserdem Ausrichtmittel zum Zentrieren und Festhalten der Verbindungsplatte bezogen auf die Haltemittel aufweisen.

Das vorstehend beschriebene Ausführungsbeispiel der Verbindungsmittel ist besonders bevorzugt. Der Anschluss der Vakuumpumpe kann beispielsweise über einen oder mehrere flexible Schläuche mit den Anschlussöffnungen an der oder den Verbindungsplatten verbunden sein.

Selbstverständlich sind auch andere Verbindungsmittel denkbar. Anstelle von an der Oberfläche der Verbindungsplatte angeordneten Vertiefungen können Bohrungen im Inneren einer Verbindungsplatte vorgesehen sein. In diesem Fall kann auf eine Abdichtplatte verzichtet werden.

Vorteilhaft sind die Haltemittel und/oder die Verbindungsmittel einer unterschiedlichen Zahl und Grösse der Probegefäße anpassbar. Insbesondere können die Haltemittel und/oder die Verbindungsmittel je nach Grösse und Zahl der eingesetzten Probegefäße ausgetauscht werden.

Die Erfindung wird im Folgenden in Ausführungsbeispielen und anhand der Zeichnungen näher erläutert. Es zeigen:
- Figur 1: eine schematische Darstellung einer Vorrichtung,
- Figur 2: eine schematische Darstellung eines Ausführungsbeispiels mit einer reduzierten Anzahl an Probegefäßen,
- Figur 3: eine perspektivische Darstellung der Verbindungsmittel und der Haltemittel in einer Explosionsdarstellung,
- Figur 4: eine perspektivische Darstellung der dichtend auf die Probegefäße ausgesetzte Verbindungsplatte,
- Figur 5: eine Draufsicht auf ein Ausführungsbeispiel einer Verbindungsplatte,
- Figur 6: einen Querschnitt durch die Verbindungsplatte gemäss Figur 5
- Figur 7: eine schematische Darstellung der gesamten Vorrichtung und
- Figur 8: eine schematische Darstellung der Antriebsvorrichtung.

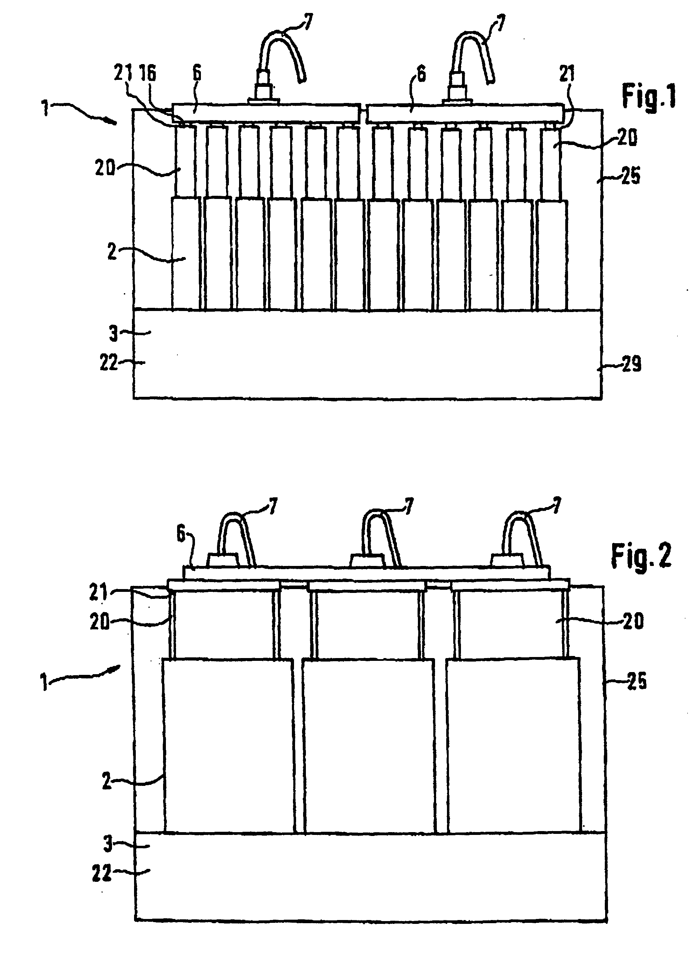

In Figur 1 sind Komponenten einer Vorrichtung 1 zum Verdampfen von Proben gezeigt. Die Vorrichtung 1 besteht im wesentlichen aus einem Gehäuse 29. In dem Gehäuse 29 sind Haltemittel in der Form eines Rack 2 vorgesehen. In das Rack 2 sind Probegefäße 20 einsetzbar. Das Rack 2 ist typischerweise aus Aluminium gefertigt. Die Probegefäße 20 bestehen typischerweise aus unten geschlossenen Glasröhrchen oder Kunststoffröhrchen.

Das Rack 2 ist auf eine Heizplatte 3 (in Figur 1 versteckt) gestellt, wodurch die in den Probegefässen 20 befindliche Probe erhitzt werden kann. Die Heizplatte ist über einen Motor 22 in Bewegung versetzbar, sodass in den Probegefässen eine Vortexbewegung der Probe erzeugt wird.

Zum Herabsetzen des Siedepunktes des Lösungsmittels der Probe wird im Innern der Probegefässe 20 ein Unterdruck erzeugt werden.

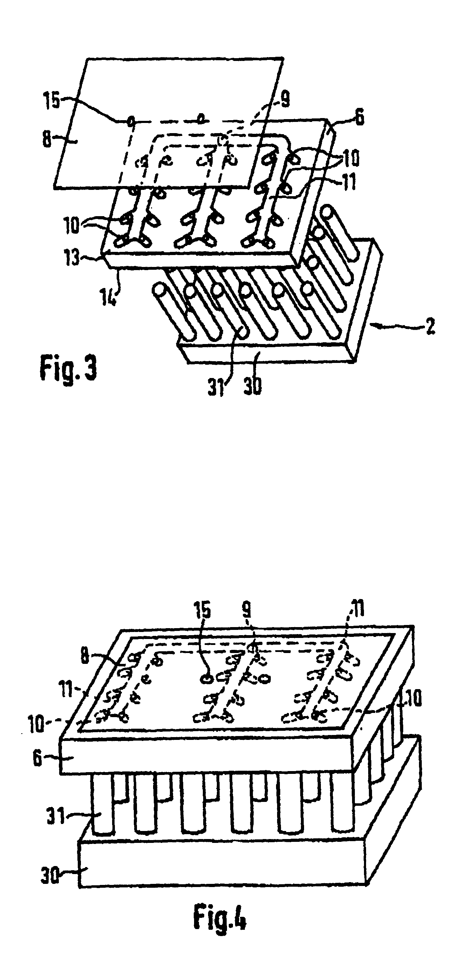

Dazu ist eine Verbindungsplatte 6 vorgesehen, welche dichtend auf die Einfüllöffnung 21 der Probegefässe 20 aufsetzbar ist. In der Verbindungsplatte 6 (siehe Figuren 3 und 4) sind Verbindungskanäle (Längskanäle 10, Vertiefung 11) vorgesehen. Über die Verbindungskanäle und einen flexiblen Schlauch 7 ist das Innere der Probegefäße 20 mit einer in Figur 1 nicht dargestellten Vakuumpumpe 4 verbunden oder verbindbar. Der Schlauch 7 wird zuerst in einen Kondensator geführt, wo das verdampfte Lösungsmittel kondensiert wird (in Figur 1 ebenfalls nicht gezeigt).

In Figur 1 ist ein Ausführungsbeispiel gezeigt, in welchem zwei Verbindungsplatten 6 vorgesehen sind. Das Rack dient zur Aufnahme von acht mal zwölf Probegefäßen. Je eine Verbindungsplatte ist auf 48 Probegefäße 20 einsetzbar.

Die Vorrichtung 1 ist ausserdem mit einer schwenkbaren Haube 25 versehen, welche zum Schutz während dem Betrieb geschlossen werden kann.

Figur 2 zeigt die Vorrichtung 1, gemäss Figur 1 mit einem Rack 2 und einer Verbindungsplatte 6, welche einer kleineren Anzahl größerer Probegefäße angepasst ist. In Figur 2 sind sechs Probegefäße 20 gezeigt. Die Probegefäße 20 sind mit der Vakuumpumpe dichtend über eine Verbindungsplatte 6 und beispielsweise über drei Verbindungsschläuche 7 verbunden.

Im Übrigen entspricht das Ausführungsbeispiel gemäss Figur 2 dem Beispiel gemäss Figur 1.

Figur 3 zeigt in einer Explosionsdarstellung schematisch das Rack 2 und die aus der Verbindungsplatte 6 und einer Abdichtplatte 8 bestehenden Verbindungsmittel.

Das Rack 2 ist aus einem Block 30 aus Aluminium geformt, in welchen zylindrische Löcher 31 zur Aufnahme der Probegefässe vorgesehen sind.

Auf die in die Löcher 31 eingesetzten Probegefäße 22 ist dichtend die Verbindungsplatte 6 aufsetzbar. Die Verbindungsplatte 6 ist mit Längskanälen 10 versehen, die sich von der den Probegefäßen zuwendbaren Unterseite 14 durch die Verbindungsplatte 6 erstrecken. Die Anordnung und Zahl der Längskanäle 10 ist so gewählt, dass diese fluchtend auf die Einfüllöffnungen 21 der Probegefäße 21 aufsetzbar sind.

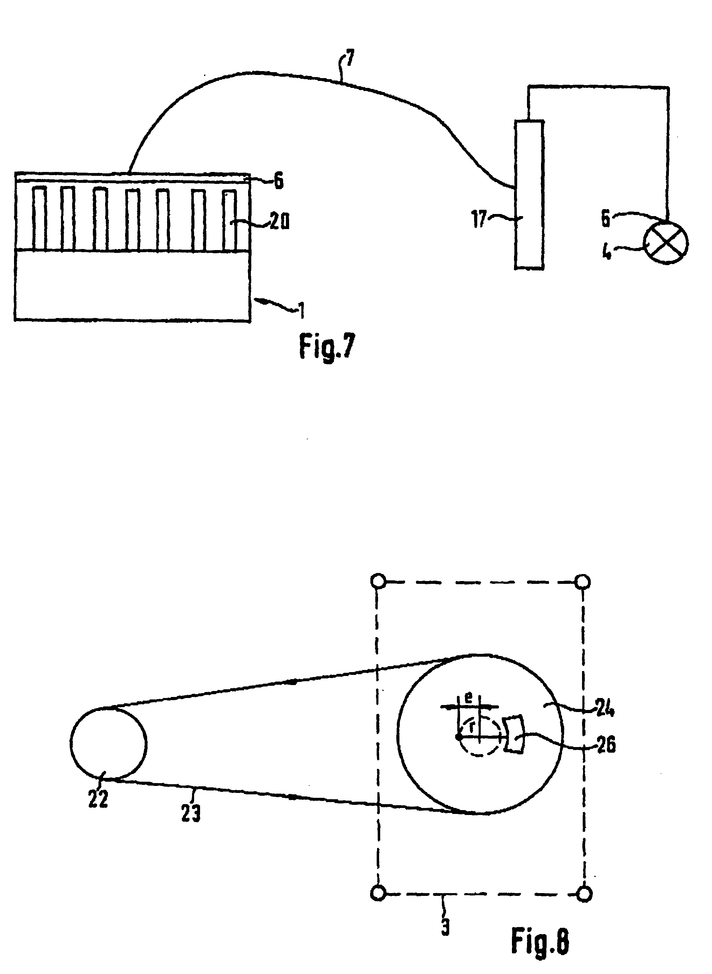

Auf der Oberseite 13 der Verbindungsplatte 6 sind Sammelkanäle in der Form von Vertiefungen 11 angeordnet. Die Vertiefungen 11 erstrecken sich von den Längskanälen 10 und verbinden diese miteinander und mit einer gestrichelt dargestellten Anschlussöffnung 9. Die Anschlussöffnung 9 ist mit der Vakuumpumpe 4 (siehe Darstellung in Figur 7) verbindbar.

Auf die Oberseite 13 der Verbindungsplatte 6 ist eine Abdichtplatte 8 dichtend aufsetzbar. Damit werden die Vertiefungen 11 nach oben hin abgedichtet und bilden Sammelkanäle.

Die Abdichtplatte 8 ist ausserdem mit Öffnungen 15 versehen, welche mit entsprechenden Öffnungen in der Verbindungsplatte 6 fluchten und welche zum Ausrichten und Befestigen der Abdichtplatte 8 und der Verbindungsplatte 6 in Bezug auf das Rack 2 dienen.

In Figur 4 ist die dichtend auf die Einfüllöffnungen 21 der Probegefässe 20 angesaugte Verbindungsplatte 6 gezeigt. Die Abdichtplatte 8 ist auf die Oberseite 13 der Verbindungsplatte 6 aufgelegt.

Die Abdichtplatte 8 ist ausserdem mit nicht dargestellten Heizmitteln, beispielsweise Heizdrähten oder einer aufgedampften Metallschicht, versehen, welche zum Vermeiden einer Kondensation der verdampften Lösungsmittel an der Innenseite der Abdichtplatte dient.

Die Verbindungsplatte 6 ist typischerweise aus beschichtetem Aluminium gefertigt. Die Abdichtplatte 8 besteht aus Glas.

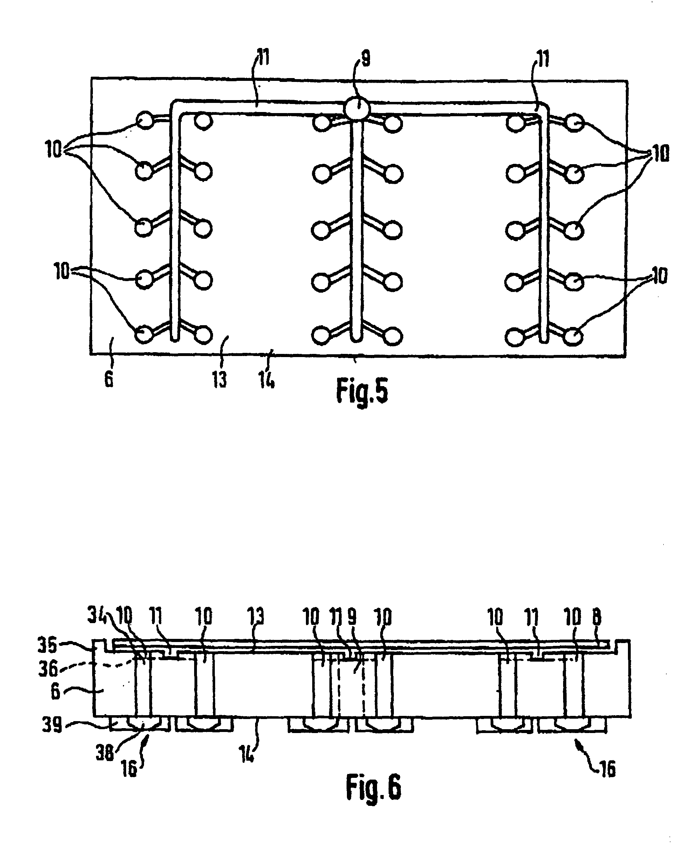

In Figur 5 ist eine Draufsicht auf die Verbindungsplatte 6 gezeigt. Die Längskanäle 10 erstrecken sich von der Unterseite 14 quer durch die Verbindungsplatte 6 bis an deren Oberseite 13. Vertiefungen 11 verbinden die Längskanäle 10 miteinander und mit der Anschlussöffnung 9.

In Figur 6 ist ein Querschnitt durch die Abdichtplatte 6 gezeigt. Auf der Unterseite 14 sind fluchtend als Verlängerung der Längskanäle 10 Dichtungsmittel 16 angeordnet, welche das dichtende Aufpressen der Abdichtplatte 6 auf die Einfüllöffnungen 21 der Probegefäße 20 erlauben.

Die Dichtungsmittel 16 sind typischerweise aus schaumstoffartigen Rondellen 39 oder Platten ausgeformt. Diese können einfach nach einem Arbeitsgang gewechselt werden, was die Kontaminationsgefahr über die Dichtungen eliminiert. Die Rondellen 39 oder Platten werden beispielsweise auf einen mit einer Bohrung versehenen Zapfen 38 aufgesetzt, der in die Längskanäle 10 eingeschraubt ist. Die Rondellen 39 oder die Platten können aus geschäumten Polyäthylen bestehen. Die Längskanäle 10 enden in einer Austrittsöffnung 34. Das Niveau 35 der Austrittsöffnung liegt oberhalb des Niveau 36 des Bodens der Vertiefung 11. Dank der auf diese Weise gebildeten Schikane wird der Rückfluss von Kondansat vermieden. Es wäre aber auch denkbar, andere Formen von Schikanen, z.B. einen vorstehenden Wulst vorzusehen.

In Figur 7 ist schematisch die gesamte Vorrichtung 1, welche aus dem Gehäuse 29, einem Kondensator 17 und einer Vakuumpumpe 4 besteht gezeigt. Die Verbindungsplatte 6 ist über einen Schlauch 7 mit einem Kondensator 17 verbunden. In dem Kondensator 17 wird das verdampfte Lösungsmittel kondensiert und in einem Auffangkolben gesammelt. Der Kondensator 17 ist mit einem Anschluss 5 einer Vakuumpumpe 4 verbunden.

Figur 8 zeigt schematisch den Antrieb des Racks, der im wesentlichen aus einem Motor 22 besteht, welcher über einen Riemen einen Exzenter 24 antreibt. Der Exzenter bewegt die Heizplatte 3, auf welche das Rack 2 gestellt ist.

Der Exzenter 24 ist ausserdem einfach einstellbar, sodass die Exzentrizität e und damit der Grad der Exzenterbewegung, d.h. die Größe der erzeugten Wirbel einstellbar ist. Ebenfalls kann auch ein Auswuchtgewicht 26 vorgesehen werden. Das Auswuchtgewicht 26 kann einstellbar sein, um einen optimalen vibrationsarmen Betrieb zu ermöglichen. Einstellbarkeit kann zum Beispiel dadurch erzeugt werden, dass der Abstand des Auswuchtgewichtes von der Dehachse, z.B. über ein Gewinde, verstellbar ist.

## Patentansprüche

1. Vorrichtung (1) zum Bearbeiten, insbesondere Verdampfen, von Proben in mit wenigstens einer Einfüllöffnung (21) versehenen Probengefässen (20),
mit Haltemitteln (2) zum gleichzeitigen Halten mehrerer Probegefässe (20),
wobei die Vorrichtung (1) mit den Einfüllöffnungen verbindbare Verbindungsmittel (6, 7, 8) aufweist, mittels welchen die Probegefässe (20) einzeln oder in Gruppen gasdicht mit einem Anschluss (5) von Mitteln (4) zum Erzeugen des Unterdrucks verbindbar und dadurch evakuierbar sind,
wobei die Verbindungsmittel wenigstens eine Verbindungsplatte (6) aufweisen, welche auf die Einfüllöffnungen (21) der Probegefässe (20) dichtend aufpressbar ist, respektive durch das Vakuum angesaugt wird,
und welche mit Verbindungswegen (10,11) zum Verbinden der Einfüllöffnungen (21) mit dem Anschluss (5) der Mittel (4) zum Erzeugen eines Unterdrucks versehen ist,
wobei die Verbindungsplatte (6) Längskanäle (10) aufweist, welche sich von der den Probegefässen (20) zuwendbaren Unterseite (14) der Verbindungsplatte (6) bis an eine der Unterseite (14) abgewandte Oberseite (13)erstrecken und welche fluchtend auf die Einfüllöffnungen (21) aufsetzbar sind,
**dadurch gekennzeichnet, dass** die Oberseite mit wenigstens einer Vertiefung (11) versehen ist, welche mit den Längskanälen (10) kommuniziert, und
dass zwischen der Austrittsöffnung (34) der Längkanäle (10) und der Vertiefung (11) Schikanen gebildet sind, die das Rückfliessen von Kondensat in die Probegefässe (20) verhindern.

2. Vorrichtung nach Anspruch 1, **dadurch gekennzeichnet, dass** das Niveau der Austrittsöffnung (34) oberhalb des Niveau des Bodens der Vertiefung (11) liegt.

3. Vorrichtung nach Anspruch 1 oder 2, **dadurch gekennzeichnet, dass** die Verbindungsplatte (6) eine mit der Vertiefung (11) kommunizierende Anschlussöffnung (9) aufweist, welche mit dem Anschluss (5) verbindbar oder verbunden ist.

4. Vorrichtung nach einem der Ansprüche 1 bis 3, **dadurch gekennzeichnet, dass** die Verbindungsmittel eine Abdichtplatte (8) aufweisen, welche zum Abdichten der Vertiefung (11) auf die Verbindungsplatte (6) aufsetzbar ist.

5. Vorrichtung nach Anspruch 4, **dadurch gekennzeichnet, dass** die Abdichtplatte (8) beheizbar ausgebildet ist, und dass die Abdichtplatte (8) aus einem transparenten Material, insbesondere aus Glas gefertigt ist

6. Vorrichtung nach einem der Ansprüche 4 oder 5, **dadurch gekennzeichnet, dass** die Abdichtplatte (8) und/oder die Verbindungsplatte (6) Ausrichtmittel (15) zum Zentrieren und Festhalten der Verbinungsplatte (6) bezogen auf die Haltemittel (2) aufweisen.

7. Vorrichtung nach einem der Ansprüche 1 bis 6, **dadurch gekennzeichnet, dass** die Verbindungsmittel (6, 7, 8) flexible Komponenten (7) aufweisen,
die Vorrichtung (1) Antriebsmittel (22, 23, 24) zum Erzeugen einer Vortex-Bewegung aufweist, und
die Verbindungsmittel (6, 7, 8) derart ausgebildet sind, dass die Haltemittel (2) und die Probegefässe (20) unabhängig von den Mitteln (4) zum Erzeugen eines Unterdrucks bewegbar sind.

8. Vorrichtung nach einem der Ansprüche 1 bis 7, **dadurch gekennzeichnet, dass** die Haltemittel (2) und/oder die Verbindungsmittel (6, 7, 8) einer unterschiedlichen Zahl und Grösse der Probegefässe (20) anpassbar sind, insbesondere austauschbar sind.

9. Vorrichtung nach einem der Ansprüche 1 bis 8, **dadurch gekennzeichnet, dass** die Vorrichtung (1) Heizmittel (3) zum Erwärmen der in den Probengefässen (20) enthaltenen Proben aufweist.

## Claims

1. Apparatus (1) for processing, in particular evaporating, samples in sample vessels (20) provided with at least one filling opening (21),
having holding means (2) for simultaneously holding a plurality of sample vessels (20),
wherein the apparatus (1) has connecting means (6, 7, 8) which can be connected to the filling openings and by means of which the sample vessels (20) can be gas-tightly connected individually or in groups to a connection (5) of means (4) for producing the reduced pressure and are evacuatable thereby,
wherein the connecting means have at least one connecting plate (6) which can be sealingly pressed on to the filling openings (21) of the sample vessels (20) or is sucked thereto by the vacuum,
and which is provided with connecting paths (10, 11) for connecting the filling openings (21) to the connection (5) of the means (4) for producing a reduced pressure,
wherein the connecting plate (6) has longitudinal passages (10) which extend from the underside (14) of the connecting plate (6), which can be turned towards the sample vessels (20), to a top side (13) remote from the underside (14), and which can be fitted in aligned relationship on to the filling openings (21),
**characterised in that** the top side is provided with at least one recess (11) communicating with the longitudinal passages (10), and
formed between the outlet opening (34) of the longitudinal passages (10) and the recess (11) are baffle means which prevent condensate from flowing back into the sample vessels (20).

2. Apparatus according to claim 1 **characterised in that** the level of the outlet opening (34) is above the level of the bottom of the recess (11).

3. Apparatus according to claim 1 or claim 2 **characterised in that** the connecting plate (6) has a connecting opening (9) which communicates with the recess (11) and which is connected or can be connected to the connection (5).

4. Apparatus according to one of claims 1 to 3 **characterised in that** the connecting means have a sealing plate (8) which can be fitted on to the connecting plate (6) for sealing the recess (11).

5. Apparatus according to claim 4 **characterised in that** the sealing plate (8) is adapted to be heatable and that the sealing plate (8) is made from a transparent material, in particular glass.

6. Apparatus according to one of claims 4 and 5 **characterised in that** the sealing plate (8) and/or the connecting plate (6) have aligning means (15) for centering and holding the connecting plate (6) fast with respect to the holding means (2).

7. Apparatus according to one of claims 1 to 6 **characterised in that** the connecting means (6, 7, 8) have flexible components (7),
the apparatus (1) has drive means (22, 23, 24) for producing a vortex movement, and
the connecting means (6, 7, 8) are so adapted that the holding means (2) and the sample vessels (20) are movable independently of the means (4) for producing a reduced pressure.

8. Apparatus according to one of claims 1 to 7 **characterised in that** the holding means (2) and/or the connecting means (6, 7, 8) can be adapted to a differing number and size of the sample vessels (20) and in particular are interchangeable.

9. Apparatus according to one of claims 1 to 8 **characterised in that** the apparatus (1) has heating means (3) for heating the samples contained in the sample vessels (20).

## Revendications

1. Dispositif (1) pour le traitement, en particulier pour l'évaporation d'échantillons dans des récipients d'échantillon (20) dotés d'au moins une ouverture de remplissage (21),
avec des moyens de maintien (2) pour le maintien simultané de plusieurs récipients d'échantillon (20),
dans lequel le dispositif (1) comporte des moyens de raccordement (6, 7, 8) pouvant être reliés aux ouvertures de remplissage, à l'aide desquels les récipients d'échantillon (20) peuvent être reliés individuellement ou en groupes de manière étanche aux gaz à un raccord (5) de moyens (4) de génération du vide, et peuvent ainsi être évacués,
sachant que les moyens de raccordement comprennent au moins une plaque de raccordement (6), laquelle peut être appliquée sur les ouvertures de remplissage (21) des récipients d'échantillon (20), respectivement est aspirée par le vide, de manière à les étancher,
et laquelle est dotée de voies de raccordement (10, 11) pour raccorder les ouvertures de remplissage (21) au raccord (5) des moyens (4) de génération d'un vide,
sachant que la plaque de raccordement (6) comporte des canaux longitudinaux (10), lesquels s'étendent de la face inférieure (14) de la plaque de raccordement (6) pouvant être tournée vers les récipients d'échantillon (20) jusqu'à une face supérieure (13) détournée de la face inférieure (14), et qui peuvent être appliqués dans l'axe sur les ouvertures de remplissage (21),
**caractérisé en ce que** la face supérieure est dotée d'au moins un renfoncement (11), lequel communique avec les canaux longitudinaux (10) et
**en ce que** des chicanes sont configurées entre l'ouverture de sortie (34) des canaux longitudinaux (10) et le renfoncement (11), chicanes qui empêchent le reflux de condensat dans les récipients d'échantillon (20).

2. Dispositif selon la revendication 1, **caractérisé en ce que** le niveau de l'ouverture de sortie (34) se trouve au-dessus du niveau du fond du renfoncement (11).

3. Dispositif selon la revendication 1 ou 2, **caractérisé en ce que** la plaque de raccordement (6) comporte une ouverture de raccordement (9) communiquant avec le renfoncement (11), laquelle peut être raccordée ou est raccordée au raccord (5).

4. Dispositif selon l'une quelconque des revendications 1 à 3, **caractérisé en ce que** les moyens de raccordement comprennent une plaque d'étanchement (8), laquelle peut être appliquée sur la plaque de raccordement (6) pour l' étanchement du renfoncement (11).

5. Dispositif selon la revendication 4, **caractérisé en ce que** la plaque d'étanchement (8) est configurée chauffante et **en ce que** la plaque d'étanchement (8) est fabriquée en un matériau transparent, en particulier en verre.

6. Dispositif selon l'une quelconque des revendications 4 ou 5, **caractérisé en ce que** la plaque d'étanchement (8) et/ou la plaque de raccordement (6) comprennent des moyens d'alignement (15) pour le centrage et le maintien de la plaque de raccordement (6) par rapport aux moyens de maintien (2).

7. Dispositif selon l'une quelconque des revendications 1 à 6, **caractérisé en ce que** les moyens de raccordement (6, 7, 8) comportent des composants flexibles (7),
**en ce que** le dispositif (1) comporte des moyens d'entraînement (22, 23, 24) pour provoquer un mouvement de vortex et
**en ce que** les moyens de raccordement (6, 7, 8) sont configurés de telle sorte que les moyens de maintien (2) et les récipients d'échantillon (20) peuvent être déplacés indépendamment des moyens (4) de génération d'un vide.

8. Dispositif selon l'une quelconque des revendications 1 à 7, **caractérisé en ce que** les moyens de maintien (2) et/ou les moyens de raccordement (6, 7, 8) peuvent être adaptés à un nombre et à une taille variables des récipients d'échantillon (20), en particulier sont interchangeables.

9. Dispositif selon l'une quelconque des revendications 1 à 8, **caractérisé en ce que** le dispositif (1) comporte des moyens de chauffage (3) pour le réchauffage des échantillons contenus dans les récipients d'échantillon (20).
